# EUROPEAN PATENT APPLICATION

(11) **EP 3 470 621 A1**
(43) Date of publication of application: **17.04.2019**
(21) Application number: 19150094.1
(22) Date of filing: 02.01.2019
(51) Int. Cl.: E21B 43/16, C01B 21/04, C01B 3/34

(54) **SYSTEM AND METHOD FOR ADJUSTING PRESSURE IN A SUBSURFACE RESERVOIR AND SYSTEM FOR PRODUCING AT LEAST ONE GAS FOR ADJUSTING PRESSURE IN A SUBSURFACE RESERVOIR**

(71) Applicant: L2 Consultancy B.V., 3722 BR Bilthoven (NL)
(72) Inventor: van Lookeren Campagne, Constant Johan, 3722 BR Bilthoven (NL)
(74) Representative: van Lookeren Campagne, Constantijn August

(57) **Abstract**

A system for adjusting pressure in a reservoir (1) includes a pump system (33) for pumping a fluid into the reservoir (1) and a system for supplying the fluid to the pump system (33). The fluid supply system includes a conversion device (24) arranged to receive a fuel and a gas mixture comprising at least one oxidant, to react the fuel with the gas mixture and to supply fluid obtained upon reaction, the fluid supply system being arranged to supply at least a portion of that fluid. The fluid supply system further includes a source of the fuel. The fuel comprises hydrogen. The conversion device (24) is arranged to react the fuel with a gas mixture comprising predominantly nitrogen.

## Description

The invention relates to a system for adjusting pressure in a reservoir, the system including:
a pump system for pumping a fluid into the reservoir; and
a system for supplying the fluid to the pump system,
wherein the fluid supply system includes a conversion device arranged to receive a fuel and a gas mixture comprising at least one oxidant, to react the fuel with the gas mixture and to supply fluid obtained upon reaction, the fluid supply system being arranged to supply at least a portion of that fluid.

The invention also relates to a system for producing at least one energy carrier.

The invention also relates to a method of adjusting pressure in a reservoir, including:
obtaining a fluid comprising nitrogen;
pumping the fluid into the reservoir; and
reacting, e.g. combusting, a fuel with a gas mixture including at least an oxidant.

EP 2 735 697 A1 discloses a method for enhancing natural gas production from an underground natural gas-containing formation. The method comprises injecting into the formation a non-corrosive displacement gas comprising nitrogen, followed by injecting into the formation a corrosive displacement gas comprising carbon dioxide. Nitrogen is separated from oxygen in an air separation unit of a power plant that generates electricity by combusting fuel using oxygen or an oxygen-enriched air mixture. The generated nitrogen is subsequently pumped into a nitrogen supply conduit that is connected to one or more nitrogen injection wells. Carbon dioxide is obtained from the flue gases of the power plant.

A problem of the known system is that the air-separation unit consumes electricity, the production of which generates carbon dioxide. When used as a displacement gas, the carbon dioxide is only captured and stored if its release can be prevented.

It is an object of the invention to provide systems and a method of the types mentioned above in the opening paragraphs that overcome these disadvantages.

The problem is solved according to a first aspect by the system according to the invention, which is characterised in that
the fluid supply system further includes a source of the fuel,
in that the fuel comprises hydrogen, and
in that the conversion device is arranged to react the fuel with a gas mixture comprising predominantly nitrogen.

The fluid that is injected into the reservoir thus comprises predominantly nitrogen. The combustion of the hydrogen in the fuel produces no additional carbon dioxide, which would need to be separated from the nitrogen or which would be injected into the reservoir. The system is thus designed to operate in a relatively environmentally friendly way.

Nitrogen is less corrosive than carbon dioxide, enhancing the lifetime of the pump system and other components downstream of the fluid supply system. The fuel comprising hydrogen may consist essentially of hydrogen or comprise at least 70 mol %, e.g. at least 90 mol % or even at least 95 mol % hydrogen. The fluid may be in gas form, obviating the need for any liquefaction.

Hydrogen is corrosive. At concentrations above 5 vol.-%, hydrogen has a negative impact on the steel infrastructure and steel conduits commonly in place around existing reservoirs, such as natural gas-containing reservoirs. Suitable coatings to protect these steel components have yet to be tested. The use of nitrogen avoids such problems.

The gas mixture with which the fuel is reacted comprises more than 50 vol.-% nitrogen. The gas mixture with which the fuel is reacted may be air. The reservoir may be a sub-terranean reservoir, e.g. a salt cavern or a hydrocarbon reservoir. This includes conventional hydrocarbon reservoirs comprising a porous rock formation in which hydrocarbons are trapped by overlying cap rock, as well as unconventional hydrocarbon reservoirs without overlying cap rock. A further example is a sub-terranean reservoir underneath the sea bed. It would be possible to inject only the hydrogen into a sub-terranean reservoir, but hydrogen is less suitable than nitrogen as a displacement gas for any natural gas (methane) still in the reservoir, due to the relatively large difference in density.

The fluid supply system may be arranged to supply all or a portion of the fluid supplied by the conversion device or to purify the fluid supplied by the conversion device and to provide all or a portion of the purified fluid.

In an embodiment, the pump system is arranged to compress the fluid to a pressure of at least 150 bar, e.g. at least 300 bar.

In this embodiment, the compressed fluid acts as an energy carrier for storing energy. Relatively large amounts of energy can be stored with relatively small variations in pressure. The indicated pressure levels correspond to those of natural gas fields, so that this embodiment is suitable for use in replacing natural gas in a sub-terranean reservoir with gas including at least nitrogen, optionally mixed with a further energy carrier such as hydrogen gas.

In an embodiment of the system, the conversion device is a combustion device arranged to combust the fuel with the gas mixture.

This embodiment is relatively simple.

A particular example of this embodiment further comprises an electricity generator, wherein the combustion device comprises a combustion engine arranged to drive the electricity generator.

This embodiment is particularly energy-efficient. The combustion device may be an internal or an external combustion engine. Examples of the former include a gas turbine or an engine with intermittent combustion, e.g. a piston engine. Examples of the latter include Stirling engines.

In an alternative embodiment, the conversion device comprises an electricity generator.

The conversion device may in particular comprise a fuel cell system with an input for the fuel, an input for the gas mixture and at least one output for providing gases remaining of the gas mixture upon passing through the fuel cell system. In an embodiment, this fuel cell system includes high-temperature fuel cells, e.g. solid oxide fuel cells and/or molten carbonate fuel cells.

In a particular example of this or the previous embodiment, the electricity generator is arranged to supply electrical power to at least the pump system.

The combustion device may alternatively comprise a combustion engine arranged to drive the pump system directly, but this example allows fluid to be pumped into the reservoir intermittently whilst continuously producing electricity, e.g. for supply to the grid or for powering other parts of the system.

In an embodiment of the system, the fluid supply system further includes a device for at least one of drying and condensing gas from the conversion device.

Thus, water vapour is removed from the fluid and the remaining fluid is provided to the pump system, in use. This helps prevent corrosion.

In an embodiment, the fuel source comprises a system for direct decomposition of methane into carbon and hydrogen.

This embodiment has a much lower carbon footprint than one in which hydrogen is obtained by steam methane reforming (SMR), partial oxidation or gasification processes. Instead, the direct decomposition is a non-oxidative process. The process may also be referred to as pyrolysis. At most a small amount of carbon dioxide need be separated from the output of the system for direct decomposition of methane. By contrast, SMR requires equipment for separating hydrogen from carbon dioxide and methane, usually by pressure swing absorption. Compared to producing hydrogen through electrolysis, which typically uses less than 1 kWh of electricity to produce the equivalent of 0.5 - 0.8 kWh of hydrogen, this embodiment is much more energy-efficient. Only a small amount of energy is needed to drive the endothermic reaction in which methane is directly converted into only carbon and hydrogen. In this reaction, the volume of gas is increased, since 1 m³ of methane produces 2 m³ of hydrogen. Some of this hydrogen can be pumped into the reservoir as well. Alternatively, by reacting it with air, for example, an even larger volume of nitrogen is obtained for use as, for example, a displacement gas. A further effect is that solid carbon, with a relatively high purity and manifold uses, e.g. for manufacturing electrodes for electrochemical systems or as additives to materials, is obtained.

The direct decomposition system need not be capable of producing a stream of pure hydrogen. Small amounts of the input gases are tolerable. The direct decomposition system need not be fed with a stream of pure methane either. The input stream may in particular be an input stream comprising hydrocarbon compounds of the general formula CₙH₂ₙ₊₂, wherein n = 1-5. In an example arranged to process such an input stream, methane is present at a concentration of at least 80 vol. %.

Examples of suitable systems for direct decomposition of methane into carbon and hydrogen include thermal and non-thermal plasma systems and solar-powered systems for thermal decomposition of methane into carbon and hydrogen, amongst others.

In an example of the embodiment in which the fuel source comprises a system for direct decomposition of methane into carbon and hydrogen, the direct decomposition system comprises at least one catalyst for catalytic decomposition of the methane into carbon and hydrogen.

The catalyst is suitable for bringing the operating temperature down or increase the conversion efficiency. Suitable catalysts include group 8-10 base metal catalysts, e.g. nickel, iron, cobalt, platinum, palladium and alloys thereof. This embodiment may be implemented in a reactor employing a bed of catalyst particles, e.g. γ-Al₂O₃ spheres impregnated with a nickel nitrate solution, for example.

In an example of the embodiment in which the fuel source comprises a system for direct decomposition of methane into carbon and hydrogen, the direct decomposition system comprises a reactor containing molten metal.

The reactor may be a molten metal bubble reactor, a molten metal capillary reactor or a fluid wall flow reactor, for example. The molten metal bubble reactor is particularly suitable. The molten metal bubble reactor comprises a vessel containing the molten metal, and a device in a lower part of the reactor vessel or column for introducing and dispersing gas in the liquid metal or metal alloy, in use. The bubbles will flow upwards through the liquid metal. Solid-state carbon produced in the process will be carried to the surface of the liquid metal. The various embodiments in which the direct decomposition system comprises a reactor containing a molten metal have the effect that few or no carbon deposits are formed in the reactor, which could in particular render any catalysts inactive. In the molten metal bubble reactor, the carbon floats to the surface of the molten metal, from where it can be removed relatively easily. Even without a catalyst, conversion yields of over 75 % are achievable. Compared with gas-phase pyrolysis, fewer compounds other than hydrogen, e.g. ethane, ethylene, acetylene and aromatics, are produced. Furthermore, the molten metal is an effective medium for heat transfer. A suitable capillary reactor is disclosed in Parra, A.A. Munera and Agar, D.W., "Molten metal capillary reactor for the high-temperature pyrolysis of methane", Int'l J. of Hydrogen Energy, 42 (19), 2017, pp. 13641-13648.

In an embodiment, in which the direct decomposition system comprises at least one catalyst for catalytic decomposition of the methane into carbon and hydrogen and the direct decomposition system comprises a reactor containing molten metal, the reactor contains at least one metal forming an active catalyst dissolved in at least one metal having a lower melting temperature.

Implementations of such a direct decomposition system are disclosed, for example, in the following references:
Geißler, T. et al., "Hydrogen production via methane pyrolysis in a liquid metal bubble column reactor with a packed bed", Chem. Eng. Journal 299, 2016, p. 192-200;
Upham, C. et al., "Catalytic molten metals for the direct conversion of methane to hydrogen and separable carbon", Science 358, 17 November 2018, pp. 917-921, with supplementary materials; and Parkinson, B. et al., "Techno-Economic Analysis of Methane Pyrolysis in Molten Metals: Decarbonizing Natural Gas", Chemical Engineering & Technology, 40 (6), 2017, pp. 1022-1030.

This embodiment has the effect of requiring a lower operating temperature to achieve a given conversion rate, or a higher conversion rate for a given operating temperature, due to the catalyst. The effect of enabling the insoluble carbon to be separated relatively easily is, however, not sacrificed. The catalyst is thus not rendered inactive by carbon deposits.

In an embodiment of the system in which the fuel source comprises a system for direct decomposition of methane into carbon and hydrogen and the direct decomposition system comprises a reactor containing molten metal, the reactor comprises a molten metal bubble reactor and the direct decomposition system includes a device for removing carbon emerging at a surface of the molten metal in the reactor.

Removal of carbon is continuous or quasi-continuous in this embodiment. Operation of the reactor need not be interrupted to remove the carbon. In one implementation, a mechanical device is operable to skim carbon from the surface of the molten metal. In another implementation, a gas stream is used to entrain the carbon particles and a filter, cyclone or electrostatic precipitator is provided for separating the carbon particles from the gas stream. In another embodiment, a layer of immiscible molten salt having a lower density than the molten metal is supported on the surface molten metal and circulated through a separate vessel for removal of the carbon therefrom. Thus, in this case the surface is the interface between the molten metal and the molten salt. In all such implementations, continuous operation is possible. It is not necessary to operate two or more parallel reactors alternately.

An embodiment of the system in which the fuel source comprises a system for direct decomposition of methane into carbon and hydrogen further includes a device for converting amorphous carbon produced by the direct decomposition system into graphite, e.g. a device arranged to use heat transferred from at least one of the direct decomposition system and a device for combustion of the fuel.

Synthetic graphite has many useful properties and applications. Where heat from other components of the system is used, the graphite can be manufactured relatively efficiently.

In an embodiment of the system in which the fuel source comprises a system for direct decomposition of methane into carbon and hydrogen , the fuel source further includes a device for separating hydrogen from unconverted other gases produced by the direct decomposition system.

This allows relatively pure hydrogen, e.g. with a purity above 99.5 % or even 99.8 %, to be supplied by the system to external users for other uses.

An embodiment of the system, in which the fuel source comprises a system for direct decomposition of methane into carbon and hydrogen, further includes a system for pumping at least a portion of the hydrogen from the direct decomposition system into the reservoir.

Thus, an energy buffer is provided, in that the hydrogen can later be recovered from the reservoir on demand. The system for pumping at least a portion of the hydrogen into the reservoir may be the pumping system for pumping the fluid into the reservoir.

An embodiment of the system, in which the fuel source comprises a system for direct decomposition of methane into carbon and hydrogen, further includes at least one electricity generator of a different type than one driven by a combustion engine operating on a fossil fuel, wherein the electricity generator is arranged to supply electrical power to the direct decomposition system.

The electricity generator is thus of a type generating zero or low carbon dioxide emissions. The electricity generators may in particular include photovoltaic panels, wind turbines or another source of intermittent power. Surplus energy can be used to generate hydrogen in the direct decomposition system.

An embodiment of the system further includes a gas supply system for supplying gas comprising at least methane to at least one other component of the system.

More generally, the gas supplied by the gas supply comprises hydrocarbon gas with the formula CₙH₂ₙ₊₂, where n = 1-5.

In an example of such a system the gas supply system includes at least one of:
a connection to a gas distribution grid external to the system;
a system for recovering natural gas from the reservoir;
a connection to at least one system for producing biogenic natural gas; and
a device for removing at least one of carbon dioxide, carbonyl sulphide, hydrogen sulphide and thiols from natural gas.

Where the gas supply system includes a system for recovering natural gas from the reservoir, the reservoir may in particular be a sub-terranean reservoir of one of the types mentioned above.

In an example of the embodiment in which the system further includes a gas supply system for supplying gas comprising at least methane to at least one other component of the system, the gas supply system is arranged to supply gas to at least one of:
a gas distribution grid external to the system;
a device arranged to mix at least the methane with one of the fluid from the fluid supply system and nitrogen obtained from the fluid from the fluid supply system.

Where the gas supply system is arranged to supply gas to a gas distribution grid external to the system, the gas supply system does so in addition to supplying gas to at least one component of the system. Mixing at least the methane with nitrogen or nitrogen and a small amount of other gases will result in a mix with a lower calorific value than pure methane. This mix may be supplied to the external grid, e.g. where users connected to the grid operate appliances that are adapted to natural gas with such a calorific value.

In an embodiment in which the system further includes a gas supply system for supplying gas comprising at least methane to at least one other component of the system and the fuel source comprises a system for direct decomposition of methane into carbon and hydrogen, the gas supply system is arranged to supply gas to the direct decomposition system.

In an embodiment, the system includes a system for recovering gas from the reservoir and an expansion device, connected to the system for recovering gas from the reservoir and coupled to a generator, the expansion device being arranged to expand the recovered gas and to drive the generator.

In this embodiment, the pump system is capable of storing the fluid at elevated pressure, e.g. above 150 bar, for example above 200 or even 400 bar, in the reservoir. The pressurised fluid is expanded in the expansion device to perform work and generate electricity. In this manner, the overall system is provided with a further energy storage capacity. The expansion device may be an air engine or a gas turbine fed with the compressed gas from the reservoir and hydrocarbon gas, which is burned in the gas turbine. The reservoir may be a sub-terranean reservoir, e.g. a naturally occurring sub-terranean reservoir. An example is a salt cavern.

In an embodiment, the system is arranged to carry out a method according to the invention.

According to another aspect, the system for producing at least one energy carrier according to the invention comprises a system for adjusting pressure in a reservoir according to the invention.

Energy carriers produced by the system may include in particular hydrogen, methane and/or natural gas, mixtures thereof and/or mixtures of any one of these gases that further include at least nitrogen, pressurised gas or gas mixtures expandable to perform work, and electricity. The system may be configured to supply at least one energy carrier to at least one of a vehicle and at least one distribution grid. Examples of vehicles include land vehicles such as cars and locomotives for trains. Examples of grids include a gas distribution grid or an electricity grid.

According to another aspect, the method according to the invention is characterised in that the fuel comprises hydrogen and in that the step of obtaining the fluid includes the step of reacting, e.g. combusting, the fuel with a gas mixture comprising predominantly nitrogen.

Compared to injecting the hydrogen directly into the reservoir, a larger volume of gas is available, which moreover has a higher density. The higher density is of particular use where the reservoir is a sub-terranean reservoir. Corrosion problems associated with the use of hydrogen at higher concentrations can be avoided.

In an embodiment of the method, the step of reacting the fuel with a gas mixture includes generating electricity.

Thus, the reaction energy is used to generate electricity. Insofar as the hydrogen is reacted, no carbon dioxide emissions result. The reaction may be in a fuel cell or in a combustion engine arranged to drive a generator, for example.

In an embodiment, the electricity is supplied to a pump system arranged to pump the fluid into the reservoir.

Transmission and conversion losses are relatively low and the plant in which the method is executed is in this respect autarkic. The electricity need not be supplied exclusively to the pump system to power the pump system.

An embodiment of the method further includes obtaining the fuel, wherein obtaining the fuel includes carrying out a process of direct decomposition of methane into carbon and hydrogen.

The direct decomposition process can also be referred to as pyrolysis. The direct decomposition process is a non-oxidative process. Thus, little or no carbon dioxide is emitted and essentially no carbon dioxide is produced. The direct decomposition process need not consist exclusively of direct decomposition of methane, depending on the purity of the input stream comprising the methane. Also, a small amount of by-products may be generated and a conversion rate of 100 % need not be achieved. However, a conversion rate of at least 70, e.g. at least 80 %, is generally achievable. The hydrogen is reacted with the gas mixture containing predominantly nitrogen. As a result, a relatively large volume of fluid for maintaining or restoring pressure in the reservoir is obtained for a given volume of methane, even if not all of the hydrogen from the direct decomposition process is reacted to obtain the fluid.

In an example of the embodiment in which the method further includes obtaining the fuel, wherein obtaining the fuel includes carrying out a process of direct decomposition of methane into carbon and hydrogen, the direct decomposition process includes the use of a catalyst.

This reduces the temperature need to achieve acceptable conversion rates or increases the conversion rate for a given temperature.

In an example of the embodiment in which the method further includes obtaining the fuel, wherein obtaining the fuel includes carrying out a process of direct decomposition of methane into carbon and hydrogen, the direct decomposition process is carried out in a reactor containing molten metal.

The reactor may be a molten metal bubble reactor, a molten metal capillary reactor or a fluid wall flow reactor, for example. The molten metal bubble reactor is particularly suitable. The molten metal bubble reactor comprises a vessel containing the molten metal, and a device in a lower part of the reactor vessel or column for introducing and dispersing gas in the liquid metal or metal alloy, in use. The bubbles will flow upwards through the liquid metal. Solid-state carbon produced in the process will be carried to the surface of the liquid metal.

In a particular example of the method, in which the method further includes obtaining the fuel, wherein obtaining the fuel includes carrying out a process of direct decomposition of methane into carbon and hydrogen, the direct decomposition process includes the use of a catalyst and the direct decomposition process is carried out in a reactor containing molten metal, the reactor contains at least one metal forming an active catalyst dissolved in at least one metal having a lower melting temperature.

This embodiment is relatively energy-efficient, since the direct decomposition process is not carried out at temperatures high enough to melt the active catalyst. Rather, this embodiment makes use of the fact that the catalyst reduces the temperature required to achieve acceptable conversion rates. Moreover, the metal having a lower melting temperature can be a relatively cheap metal.

An example of the embodiment of the method in which the method further includes obtaining the fuel, wherein obtaining the fuel includes carrying out a process of direct decomposition of methane into carbon and hydrogen and the direct decomposition process is carried out in a reactor containing molten metal, the reactor comprises a molten metal bubble reactor and the method further includes removing carbon from a surface of the molten metal in the molten metal bubble reactor.

The carbon may be removed by entrainment with the gas in the bubbles, by an additional gas stream, mechanically, or by a circulating stream of molten salt on the surface of the molten metal, for example. The reactor can be operated for a relatively long period without carbon deposits forming on the reactor wall. Any catalysts retain their activity for a relatively long period. The carbon can be separated for use as a raw material in many different manufacturing processes.

An example of the embodiment of the method that further includes obtaining the fuel, wherein obtaining the fuel includes carrying out a process of direct decomposition of methane into carbon and hydrogen, further includes converting amorphous carbon produced by the direct decomposition process into graphite, e.g. using heat from at least one of the direct decomposition process and combustion of the fuel.

This embodiment results in relatively valuable solid-state material for use in a multitude of industrial products. Because the products from the direct decomposition process are at a relatively high temperature, recovery of heat for use in the conversion into graphite provides environmental and costs benefits. The same is true for the heat produced by combustion of the fuel.

In an example of the embodiment of the method that further includes obtaining the fuel, wherein obtaining the fuel includes carrying out a process of direct decomposition of methane into carbon and hydrogen, hydrogen is separated from other gases resulting upon carrying out the direct decomposition process.

The result is relatively pure hydrogen, which can be used in further industrial processes, for example. The other gases include unconverted gases from an input stream to the direct decomposition process and reaction products other than hydrogen.

In an example of the embodiment of the method that further includes obtaining the fuel, wherein obtaining the fuel includes carrying out a process of direct decomposition of methane into carbon and hydrogen, electricity from a renewable energy source is used in the direct decomposition process.

A renewable energy source is one that is naturally replenished on a human time scale, such as sunlight, wind, rain, tides, waves and geothermal heat. Many renewable energy sources produce electricity only intermittently or at least at times when demand is not equal to the power produced. The process of adjusting the pressure in the reservoir may also be timed such that pressure is increased when surplus electricity is converted into hydrogen.

In an example of the embodiment of the method that further includes obtaining the fuel, wherein obtaining the fuel includes carrying out a process of direct decomposition of methane into carbon and hydrogen, the methane is obtained from at least one of the reservoir and a system including a fermentation device for the production of biogas.

As explained above, a relatively large volume of nitrogen is obtained for a given volume of methane, even if not all of the hydrogen produced in the direct decomposition process is actually reacted with the gas mixture comprising nitrogen. Thus, methane can be recovered from a sub-terranean reservoir and the fluid generated in the method pumped back in so as to maintain pressure and prevent subsidence. In the alternative using biogas, methane need not be extracted from the reservoir to raise the pressure therein. Furthermore, the embodiment in which biogas is produced has negative carbon dioxide emissions. This is because carbon dioxide from the air is converted into hydrocarbon gas and this is then converted into carbon and hydrogen, but the carbon is not oxidised.

An example of the embodiment of the method that further includes obtaining the fuel, wherein obtaining the fuel includes carrying out a process of direct decomposition of methane into carbon and hydrogen, further includes pumping at least a portion of the hydrogen into the reservoir.

Thus, the requirement for separate hydrogen storage facilities is reduced. Furthermore, the fluid comprising nitrogen does not reduce the calorific value of gas in the reservoir to the same extent. The pressurised reservoir, which may be a sub-terranean reservoir such as a porous formation or a salt cavern, will be filled with nitrogen and hydrogen. Hydrogen, having a lower density, will accumulate at the top of the reservoir. In periods of low demand for energy carriers such as hydrogen and electricity, for instance in the summer when a surplus of renewable energy is available, a relatively large volume of hydrogen can be produced and stored. The pressure can be left unchanged by reducing the volume of nitrogen.

In an embodiment of the method, the fluid is used as a displacement medium to recover hydrocarbon compounds, e.g. natural gas, from the reservoir.

Nitrogen is well-suited for this, due to its density and low corrosivity.

In an example of the method that further includes obtaining the fuel, wherein obtaining the fuel includes carrying out a process of direct decomposition of methane into carbon and hydrogen, and that further includes pumping at least a portion of the hydrogen into the reservoir, wherein the fluid is used as a displacement medium to recover hydrocarbon compounds, e.g. natural gas, from the reservoir, the fluid is used as the displacement medium at a first stage and hydrogen is pumped into the reservoir at a second, subsequent stage of operating the reservoir.

As a consequence, it is possible to maintain the calorific value of gas recovered from e.g. a sub-terranean reservoir within at least a certain range. A suitable range corresponds to 15-20 vol.-% nitrogen, the nitrogen fraction in gas currently recovered from natural gas fields in the Netherlands and northern Germany. In this embodiment, the method is executed in accordance with the normal development of the exploitation of a natural gas field. In the first stage, the natural gas is recovered and the fluid is used to maintain pressure in the reservoir. In the second stage, the pressure may be raised, but the reservoir is in any case used as an energy buffer. In the second stage, nitrogen and hydrogen will generally both be pumped into the reservoir. The pressure in the reservoir may be raised, e.g. above 150 bar, so that the pressurised gas can function as an energy carrier. The hydrogen may form less than 10 vol.-%, e.g. 5 vol.-% or less, of the gas pumped into the reservoir in cases in which pressurised gas is the main energy carrier of the energy buffer.

In an embodiment of the method in which the fluid is used as a displacement medium to recover hydrocarbon compounds, e.g. natural gas, from the reservoir, gas from the reservoir is mixed with one of the fluid and nitrogen gas obtained from the fluid, e.g. at a ratio adjusted to achieve a target calorific value.

Again, it is thus possible to supply gas conforming to existing specifications for use in e.g. domestic heating systems or other apparatus.

In an embodiment of the method, gas is recovered from the reservoir and expanded to perform work to drive an electricity generator.

This embodiment provides a further way of temporarily storing energy in a relatively efficient way. It is well-suited to sub-terranean reservoirs in the form of salt caverns, for example. The fluid is compressed and stored in the reservoir at elevated pressure during times in which surplus renewable electric energy from solar, wind or hydropower sources is available. This electric energy can be used for the production of pressurised gas comprising nitrogen and/or hydrogen. The renewable energy sources may also provide energy for the endothermic direct decomposition process and the system for pumping gas into the reservoir. The pressurised gas is expanded to generate electricity in times of increased demand. Keeping the pressure in a sub-terranean reservoir at such an elevated level has the effect of preventing subsidence in any event. Removal of gas from the reservoir has a minimal effect on the pressure, so that relatively small swings occur. At relatively high pressure levels, even small pressure variations permit a large amount of energy to be stored. Furthermore, this manner of storing energy is more efficient than methods relying on electrolysis and the use of hydrogen as a chemical energy carrier. This embodiment may in particular be combined with the embodiment that further includes obtaining the fuel, wherein obtaining the fuel includes carrying out a process of direct decomposition of methane into carbon and hydrogen, and that further includes pumping at least a portion of the hydrogen into the reservoir. Depending on demand and availability, the hydrogen may be removed from the reservoir and used as a chemical energy carrier or the nitrogen, optionally with the hydrogen, is expanded so that the pressurised gas or gas mixture functions as an energy carrier.

In an embodiment, the method according to the invention involves the use of a system according to the invention.

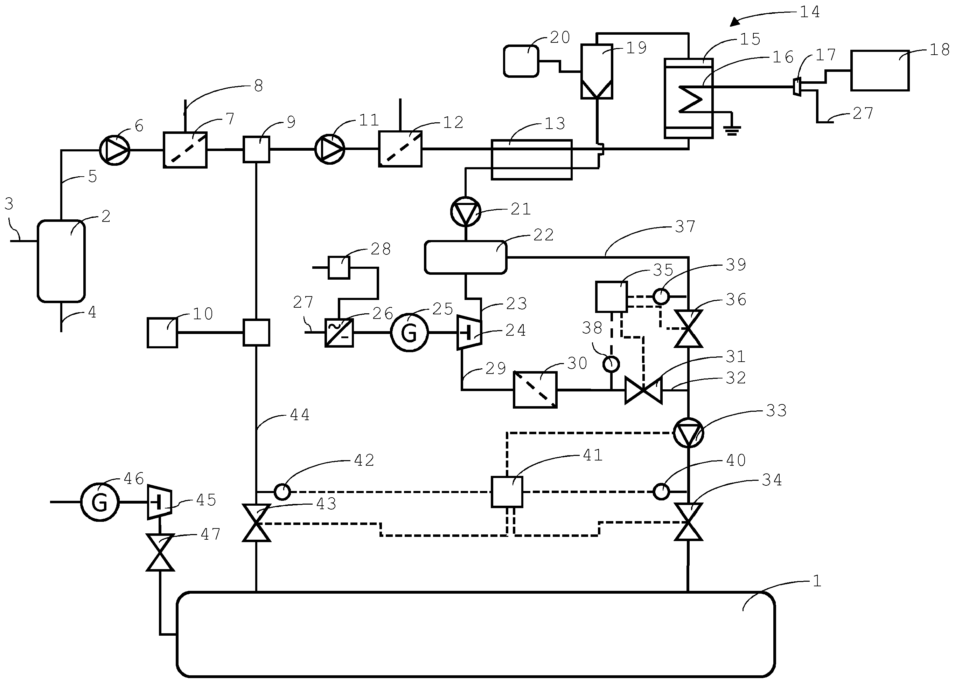

The invention will be explained in further detail with reference to the accompanying drawing, which is a schematic diagram of a system for producing at least one energy carrier.

The illustrated system for producing at least one energy carrier includes a system for adjusting the pressure in a sub-terranean reservoir 1. The reservoir may in particular comprise porous sandstone containing natural gas. The system for adjusting pressure in the reservoir 1 is suitable for preventing subsidence of the overburden. In the process, one or more energy carriers, e.g. electricity, hydrogen, natural gas and pressurised gas comprising nitrogen and/or hydrogen may be produced.

In the illustrated embodiment, a hydrocarbon gas mixture comprising gases with the formula CₙH₂ₙ₊₂, where n = 1-5, is obtained from one of three sources. The gas mixture may in particular comprise predominantly methane, e.g. at least 70 vol.-%, more particularly at least 80 vol.-%.

A first source comprises a fermentation device 2 with an inlet for biodegradable substrate 3, an outlet 4 for digestate and a connection to a pipeline 5 for biogas. The fermentation device 2 is arranged to produce a gas mixture comprising biomethane by anaerobic fermentation of a biodegradable substrate. In the illustrated embodiment, a compressor 6 and a biogas purifier 7 are comprised in the first source, but may be omitted in other embodiments. The biogas purifier 7 may be arranged to remove oxidised and sulphurised compounds, for example. The biogas purifier 7 may in particular be arranged to reduce the amount of at least one of carbon dioxide, carbon monoxide, carbonyl sulphide, hydrogen sulphide, water vapour, nitrogen and siloxanes. The biogas purifier 7 has an outlet 8 for such by-products and is otherwise connected to a source selector 9. By way of example, the biogas purifier 7 may be arranged to purify the gas mixture by means of membrane filtration and/or adsorption processes.

A second source comprises a connector 10 to an external source. The illustrated embodiment is based on the assumption that the external source comprises a gas distribution grid (not shown in detail) for conveying natural gas from a different gas field than the one comprising the reservoir 1. Alternatively, the external source may comprise a regasification unit for regasifying liquefied natural gas. The gas from this source in one embodiment comprises 90 vol.-% methane and 10 vol.-% ethane.

A third source comprises the reservoir 1 itself.

In other embodiments and methods, one or more of these three sources may be omitted.

The hydrocarbon gas mixture is compressed in a further compressor 11. In the illustrated embodiment, a further gas purifier 12 is arranged to reduce the amount of at least one of carbon dioxide, carbon monoxide, carbonyl sulphide, hydrogen sulphide, water vapour, nitrogen, thiols and siloxanes. The gas purifier 12 may be arranged to implement at least one of the Claus process, pressure-swing adsorption or adsorption by zinc oxide adsorbents. In an embodiment, the further gas purifier 12 leaves nitrogen in the gas stream received by the further gas purifier 12.

The resulting gas mixture is conducted through a heat exchanger 13 to a pyrolysis system 14 for the direct conversion of methane into hydrogen and carbon. In the illustrated embodiment, the pyrolysis system comprises a molten metal bubble reactor 15. In an embodiment, the metal comprises an active catalyst, e.g. at least one of Ni, Pt and Pd. The active catalyst may be dissolved in metal or a metal alloy having a lower melting temperature than the active catalyst, e.g. at least one of In, Ga, Sn, Bi, Pb or alloys thereof. The inactive metal may in particular be a metal having a melting temperature above 500 °C, e.g. tin. The molten metal bubble reactor 15 is heated by an electrical heating device 16. The molten metal bubble reactor 15 is operated at a temperature above the melting temperature of the inactive metals and below the temperature of at least one of the active catalysts. The temperature can, for example, be in the range of 800 - 1600 °C, e.g. 1000 - 1400 °C, specifically 1050 - 1350 °C. In these temperature ranges, the hydrogen yield increases with increasing temperature. The operating point can, for example be selected to achieve a balance between the hydrogen yield and the amount of energy needed to operate the molten metal bubble reactor 15.

The molten metal bubble reactor 15 is arranged to disperse the gas introduced at the bottom of the reactor vessel or column in the liquid metal or metal alloy, in use. The bubbles will then flow upwards through the liquid metal. Solid-state carbon produced in the process will be carried to the surface of the liquid metal. In an embodiment, the carbon is removed by a device (not shown) for removing carbon at a surface of the liquid metal, e.g. a device arrange to generate a stream of compressed gas or a mechanical device. The carbon may alternatively be entrained by the gas emitted from the surface, as illustrated.

The carbon thus produced has a relatively high purity, e.g. in the range of 99-100 %. In embodiments in which the feed gas originates from the fermentation device 2, the carbon generated in the pyrolysis system 14 is biogenic carbon. Such carbon has a mineral content in the range of 0-0.5 wt.-%, e.g. 0-0.1 wt.-%. Generally, the isotope composition of biogenic carbon identifies it as such, in that it has a relatively high amount of carbon-14 compared to carbon from fossil fuel sources.

In an example, the molten metal bubble reactor comprises a quartz glass-steel bubble column reactor filled with liquid tin at a temperature of between 900 and 1100 °C. The molten metal bubble reactor 15 may be operated at a hydrogen yield of between 70 and 80 %, for example.

In another embodiment, the metal consists of a mixture of 27 wt.-% Ni and 73 wt.-% Bi, and is fed a gas mixture consisting essentially of 90 vol.-% methane and 10 vol.-% ethane. The molten metal bubble reactor is operated to achieve a conversion yield of between 90 and 95 % (with respect to the methane fraction).

In a conceivable embodiment, a fired heater arranged to burn hydrogen and/or natural gas is used to supply heat to the molten metal bubble reactor 15. However, in the illustrated embodiment, the metal in the molten metal bubble reactor 15 or a heat transfer medium circulated through the molten metal bubble reactor 15 is heated by an electrical heating device 16. The electrical heating device 16 may be operable to effect resistive, inductive or electric arc heating in an electric arc furnace. Electrical power is supplied to the electrical heating device 16 from a connector 17. As illustrated, electrical power may originate from a system 18 for generating electricity of a different type than one driven by a combustion engine operating on a fossil fuel. The electricity generation system 18 may in particular comprise wind turbines, photovoltaic devices, hydropower systems, a system for the combustion of biogas, e.g. biogas produced by the fermentation device 2, or similar sources of renewable energy.

Alternatively, electrical power supplied to the connector 17 may be generated by burning part of the hydrogen produced by the pyrolysis system 14, as will be explained.

The connector 17 may additionally or alternatively be connected to the electricity grid (not shown).

In an embodiment, the connector 17 is arranged to switch between sources. In one such embodiment, the electricity generation system 18 is connected to the grid and the connector is arranged to connect the electricity generation system 18 to the pyrolysis system 14 when the electrical power produced is surplus to requirements. In this way, surplus electrical power is converted relatively efficiently to hydrogen as a storage medium.

In a typical embodiment, a pyrolysis system 14 as described is suitable for generating the hydrogen equivalent of at least 7 kWh per kWh of electricity used to power the (endothermic) reaction.

In the illustrated embodiment, the gas and carbon produced by the pyrolysis system 14 are fed into a carbon powder separator 19, from where the carbon is led to a carbon container 20. The carbon produced may be in the form of a cake or may comprise flake-shaped powder in the form of flake-shaped agglomerates having a size in the range of 15-20 µm, consisting of single particles with a diameter in the range of 40-100 nm. The specific surface area based on BET measurements lies within a range of 17-40 m²/g.

The carbon container 20 may comprise bags or a metallic container, e.g. provided with a ceramic porous filter. In another embodiment, the carbon container 20 may be arranged to hold a suspension of the carbon in a liquid. This helps avoid loss of fine carbon powder. The carbon container 20 may be removable for transportation to a facility for further processing of the carbon.

Applications for the carbon powder thus produced include the production of carbon composite materials, the production of steel, etc. A relatively low amount of carbon dioxide is thus involved in the production of these materials.

In a particular embodiment, the carbon is used as input for the so-called HIsarna ironmaking process, described e.g. in Van den Brink, E, "Nieuwe IJzertijd", De Ingenieur, 13, 3 September 2010, pp. 50-51 or "Nieuwe ijzersmelter produceert helft minder CO2", De Ingenieur, 6 September 2018, p. 48. This process is specifically designed to make use of powdered carbon. It is carried out in a cyclone converter furnace with a relatively narrow neck at the top, in which a cyclone is generated. Iron ore and oxygen are injected into the cyclone. The molten iron ore flows down the walls of the cyclone dropping into a layer of molten slag sitting on top of a layer of liquid iron. Carbon powder is injected into the slag layer through water-cooled lances.

In an alternative or additional embodiment, the system for producing energy carriers includes a device for conversion of the carbon powder into graphite (not shown). This device may be powered by any of the sources of electrical power comprised in the system described herein. The graphite is suitable for producing electrodes, for example, e.g. battery electrodes such as electrodes for Li-ion batteries or electrodes for electrolysis units.

The gas produced by the pyrolysis system 14 comprises predominantly hydrogen. The gas produced by the pyrolysis system 14 is first passed through the heat exchanger 13. There, the relatively hot gas gives up some of its heat to the incoming methane stream that is conducted to the pyrolysis system 14. In an embodiment (not shown), a further cooling device is provided. The cooled gas stream is then compressed by a compressor 21 for storage in a hydrogen storage device 22, e.g. a tank. A different type of hydrogen storage device 22 is possible. In alternative embodiments, the hydrogen compressor 21 may be omitted. In such embodiments, ammonia or magnesium hydride may be used as a storage medium. Other chemical or physical hydrogen storage systems are conceivable, e.g. Liquid Organic Hydrogen Carrier (LOHC) system for binding and releasing hydrogen through reversible hydrogenation.

The illustrated system includes a conduit 23 for supplying hydrogen to a combustion engine 24 arranged to take in air. The combustion engine 24 may be a continuous combustion engine, e.g. a turbine. The combustion engine 24 is arranged to drive a generator 25 for generating electricity. A DC/AC converter 26 is provided for the purpose of supplying electricity to the connector 17 via an electrical connection 27, so that at least some of the electricity can be used to power the electrical heating device 16 in the pyrolysis system 14.

A further connector 28 allows electricity to be supplied to a distribution grid, for example. The hydrogen in the hydrogen storage device 22 can thus function as an energy buffer, to supply electricity to the grid when other sources of renewable energy cannot meet demand.

In an alternative embodiment, the combination of a combustion engine 24 and generator 25 are replaced by a hydrogen fuel cell system arranged to generate electricity directly. The hydrogen fuel cell system may comprise high-temperature fuel cells, including at least one of solid oxide fuel cells and molten carbonate fuel cells.

In operation, the combustion engine 24 supplies a fluid through a fluid supply conduit 29. In this case, the fluid comprises a gas mixture comprising predominantly nitrogen, but the fluid also comprises water vapour. This fluid supply conduit 29 leads to a gas processing system 30 for carrying out at least one of a drying process and a condensation process. The output of the gas processing system 30 will be mainly nitrogen, together with a small amount of carbon dioxide and noble gases originating from the atmosphere. In particular, the fluid from the gas processing system 30 will comprise at least 95 vol.-% nitrogen, e.g. at least 99 vol.-% nitrogen.

In the illustrated embodiment, the fluid from the gas processing system 30 can pass via a fluid supply valve 31 in a further fluid supply conduit 32, pump system 33 and reservoir inlet valve 34 to the reservoir 1. A first control system 35 is arranged to control the fluid supply valve 31 and a valve 36 in a conduit 37 from the hydrogen storage device 22 to the pump system 33. Sensors 38-40 allow the flow rates to be determined. Thus, a mix of fluid and hydrogen can be supplied to the pump system 33 for feeding into the reservoir 1. The first control system 35 is arranged to control the proportions of the constituents of this mix.

A second control system 41 in communication with the first control system 35 controls the pump system 33 and the reservoir inlet valve 34 for varying the rate of flow of fluid into the reservoir 1. The second control system 41 is also connected to a sensor 42 and valve 43 for controlling a rate of flow of gas out of the reservoir 1 through an output conduit 44. The fluid supplied from the system comprising the combustion engine 24 and gas processing system 30 can thus be used as a displacement gas for recovery of natural gas from the reservoir 1. The second control system 41 controls the pressure in the reservoir 1 by controlling the ratio of gas injected into the reservoir 1 to the ratio of gas recovered from the reservoir 1.

In an alternative embodiment, a single control system fulfils the roles of the first and second control systems 35,41.

In the illustrated embodiment, the output conduit 44 leads to the source selector 9, which is arranged to provide a portion of the recovered gas as input to the pyrolysis system 14 and a portion via the gas grid connector 10 to a gas distribution grid (not shown). In other embodiments, the output conduit 44 leads directly to the gas grid connector 10.

In a particular mode of operation, the first control system 35 is set to provide mainly or only the fluid from the fluid supply system comprising the combustion engine 24 and the gas processing system 30 to the pump system 33 at a first stage. This fluid displaces the natural gas in the reservoir 1. When the reservoir 1 is wholly or partially depleted of hydrocarbon gas, a second stage commences, in which hydrogen is also conducted to the pump system 33. All the while, the pressure in the reservoir 1 is maintained. Subsidence is thereby prevented. Continued operation at the second stage will lead to a reservoir 1 increasingly filled with hydrogen, providing an energy buffer capacity for storage of surplus sustainable energy, such as wind power. Thus, even after all the natural gas has been recovered from the reservoir 1, the system for producing at least one energy carrier can remain in operation.

In the illustrated embodiment, a further energy storage facility is provided, which comprises an expansion device 45 coupled to a further generator 46. In this embodiment, the pump system 33 is arranged to compress the fluid to be pumped into the sub-terranean reservoir 1 to a relatively high pressure. Upon recovery, the fluid, in the form of gas from the sub-terranean reservoir 1 is expanded in the expansion device 45 to perform work and thus drive the generator 46. A valve 47 controls the operation of the expansion device 45. The expansion device 45 may be an air engine or a gas turbine, for example. The latter option is of particular use where the sub-terranean reservoir 1 still contains natural gas or is also used to store hydrogen. In the illustrated embodiment, the further generator 46 may be coupled to the same DC/AC converter 26 as the generator 25. Electricity from the further generator 46 can thus be supplied to an electrical grid or to the electrical heating device 16, or both.

The invention is not limited to the embodiments described above, which may be varied within the scope of the accompanying claims. For example, a fuel cell may be arranged to generate electricity in parallel to the generator 25. Surpluses of electricity generated by the system may be fed into the electrical grid (not shown). In embodiments, hydrogen generated by the system may be supplied to a hydrogen transport grid or mixed directly with gas from the sub-terranean reservoir 1, rather than first being pumped into the reservoir 1.

In the illustrated embodiment, the fluid from the fluid supply system is pumped into the reservoir 1 and will thus have the effect of somewhat reducing the calorific value of the gas recovered from the reservoir 1. A further development includes a mixing system for mixing gas recovered from the reservoir 1 with at least one of the fluid, the hydrogen generated by the pyrolysis system and hydrocarbon gas obtained from an external source to adjust the calorific value. This mixing system may in particular be arranged to adjust the proportions of the constituents of the mix in accordance with a target value of the calorific value. The external source may be a distribution grid connected to the gas grid connector 10 or a source of regasified liquefied natural gas.

In the illustrated embodiment, the gas from the carbon powder separator 19 is burned in the combustion engine 24 or supplied to the reservoir 1, so that extremely high purity is not required. In alternative embodiments, some or all of the gas may be purified to above 99.5 % or even 99.9 % purity by separating the hydrogen using cryogenic separation, hydrogen membranes, pressure swing absorption or a combination thereof.

### List of reference numerals

- 1: - Reservoir
- 2: - Fermentation device
- 3: - Inlet for bio-degradable substrate
- 4: - Outlet for digestate
- 5: - Biogas pipeline
- 6: - Biogas compressor
- 7: - Biogas purifier
- 8: - By-product outlet
- 9: - Source selector
- 10: - Gas grid connector
- 11: - Compressor
- 12: - Gas purifier
- 13: - Heat exchanger
- 14: - Pyrolysis system
- 15: - Molten metal bubble reactor
- 16: - Electrical heating device
- 17: - Connector
- 18: - Electricity generation system
- 19: - Carbon powder separator
- 20: - Carbon container
- 21: - Hydrogen compressor
- 22: - Hydrogen storage device
- 23: - Hydrogen conduit
- 24: - Combustion engine
- 25: - Generator
- 26: - DC/AC Converter
- 27: - Heating device connection
- 28: - Grid connector
- 29: - Fluid supply conduit
- 30: - Gas processing system
- 31: - Fluid supply valve
- 32: - Fluid supply conduit
- 33: - Pump system
- 34: - Reservoir inlet valve
- 35: - First control system
- 36: - Hydrogen valve
- 37: - Hydrogen conduit to reservoir
- 38: - Hydrogen sensor
- 39: - Fluid supply sensor
- 40: - Further fluid supply sensor
- 41: - Second control system
- 42: - Output sensor
- 43: - Output valve
- 44: - Output conduit
- 45: - Expansion device
- 46: - Further generator
- 47: - Expansion device valve

## Claims

1. System for adjusting pressure in a reservoir (1), the system including:
a pump system (33) for pumping a fluid into the reservoir (1); and
a system for supplying the fluid to the pump system (33),
wherein the fluid supply system includes a conversion device (24) arranged to receive a fuel and a gas mixture comprising at least one oxidant, to react the fuel with the gas mixture and to supply fluid obtained upon reaction, the fluid supply system being arranged to supply at least a portion of that fluid,
**characterised in that**
the fluid supply system further includes a source of the fuel,
**in that** the fuel comprises hydrogen, and
**in that** the conversion device (24) is arranged to react the fuel with a gas mixture comprising predominantly nitrogen.

2. System according to claim 1,
wherein the fuel source comprises a system (14) for direct decomposition of methane into carbon and hydrogen.

3. System according to claim 2,
wherein the direct decomposition system (14) comprises a reactor (15) containing molten metal.

4. System according to any one of the preceding claims,
further including a gas supply system for supplying gas comprising at least methane to at least one other component of the system, e.g. a gas supply system including at least one of:
a connection (10) to a gas distribution grid external to the system;
a system for recovering natural gas from the reservoir (1);
a connection to at least one system (2) for producing biogenic natural gas; and
a device (7;12) for removing at least one of carbon dioxide, carbonyl sulphide, hydrogen sulphide and thiols from natural gas.

5. System according to any one of the preceding claims, further including:
a system for recovering gas from the reservoir (1); and
an expansion device (45) connected to the system for recovering gas from the reservoir and coupled to a generator (46), the expansion device (45) being arranged to expand the recovered gas and to drive the generator (46).

6. System for the production of at least one energy carrier, comprising a system according to any one of the preceding claims.

7. Method of adjusting pressure in a reservoir (1), including:
obtaining a fluid comprising nitrogen;
pumping the fluid into the reservoir (1); and
reacting, e.g. combusting, a fuel with a gas mixture including at least an oxidant, **characterised in that**
the fuel comprises hydrogen and **in that** the step of obtaining the fluid includes the step of reacting, e.g. combusting, the fuel with a gas mixture comprising predominantly nitrogen.

8. Method according to claim 7,
further including obtaining the fuel, wherein obtaining the fuel includes carrying out a process of direct decomposition of methane into carbon and hydrogen.

9. Method according to claim 8,
wherein the direct decompositon process is carried out in a reactor (15) containing molten metal.

10. Method according to claim 9,
wherein the reactor (15) comprises a molten metal bubble reactor, and the method further includes
removing carbon from a surface of the molten metal in the molten metal bubble reactor (15).

11. Method according to any one of claims 8-10,
further including converting amorphous carbon produced by the direct decomposition process into graphite, e.g. using heat from at least one of the direct decomposition process and combustion of the fuel.

12. Method according to any one of claims 8-11,
wherein the methane is obtained from at least one of the reservoir (1) and a system including a fermentation device (2) for the production of biogas.

13. Method according to any one of claims 7-12,
wherein the fluid is used as a displacement medium to recover hydrocarbon compounds, e.g. natural gas, from the reservoir (1).

14. Method according to claim 13,
wherein gas from the reservoir (1) is mixed with one of the fluid and nitrogen gas obtained from the fluid, e.g. at a ratio adjusted to achieve a target calorific value.

15. Method according to any one of claims 7-14,
wherein gas is recovered from the reservoir (1) and expanded to perform work to drive an electricity generator (46).
